## Europäisches Patentamt
## European Patent Office
## Office européen des brevets

(19)

(11) Veröffentlichungsnummer: **0 263 894**
**B1**

(12)

# EUROPÄISCHE PATENTSCHRIFT

(45) Veröffentlichungstag der Patentschrift:
25.04.90

(51) Int. Cl.⁴: **G01C 21/16**

(21) Anmeldenummer: 86114345.1

(22) Anmeldetag: **16.10.86**

(54) Verfahren zur Kursbestimmung in Luftfahrzeugen.

(43) Veröffentlichungstag der Anmeldung:
**20.04.88 Patentblatt 88/16**

(45) Bekanntmachung des Hinweises auf die Patenterteilung:
**25.04.90 Patentblatt 90/17**

(84) Benannte Vertragsstaaten:
**CH DE ES FR GB IT LI SE**

(56) Entgegenhaltungen:
US-A- 4 402 049

PROCEEDNGS OF THE IEEE 1984 NATIONAL AEROSPACE & ELECTRONICS CONFERENCE, Band 1, 21.-25. Mai 1984, Seiten 406-413, IEEE, New York, US; D. LOTTMAN et al.: "Kalman filter implementation in the litton LR-80 AHRS" PROCEEDINGS OF THE IEEE 1985 NATIONAL AEROSPACE AND ELECTRONICS CONFERENCE NAECON, Band 2, Seiten 1198-1205, 20.-24. May 1985, IEEE, New York, US; J.T. NIELSON et al.: "GPS aided inertial navigation" IEEE TRANSACTIONS ON AEROSPACE AND ELECTRONIC SYSTEMS, Band AES-9, Nr. 1, Januar 1973, Seiten 18-27; R.A. NASH, Jr. et al.: "Altitude damping of space-stable inertial navigation systems"

(73) Patentinhaber: **LITEF GmbH, Lörracher Strasse 18, D-7800 Freiburg/Br.(DE)**

(72) Erfinder: **Kleinschmidt, Michael, Dr., in den Schäfergärten 19, D-7801 Schallstadt-Mengen(DE)**

(74) Vertreter: **TER MEER - MÜLLER - STEINMEISTER & PARTNER, Mauerkircherstrasse 45, D-8000 München 80(DE)**

## Beschreibung

Die Erfindung betrifft ein Verfahren zur Kursbestimmung in Luftfahrzeugen nach dem Oberbegriff des Patentanspruchs.

Die Ermittlung des tatsächlichen Steuerkurses eines mit einer Trägheitsanlage ausgerüsteten Luftfahrzeugs erfolgt bisher entweder durch die Messung und Bearbeitung der beiden Horizontalkomponenten der Erddrehrate mittels eines Kreiselkompasses oder durch die Zuführung eines externen Kurssignals, z.B. von einem Magnetkompaß oder von einem Radiokompaß.

Die Bestimmung des Kurses durch die Messung der Erddrehrate erfordert hochgenaue Kreisel, die schon aus Kostengründen nicht in jedem Fall zur Verfügung stehen. Anderenfalls wird der Kurs so ungenau, daß er den heutigen Anforderungen in der Luftfahrt nicht gerecht wird. Als Grenze wird hier eine Kursungenauigkeit von 1° angenommen.

Die Verwendung externer Kursreferenzsignale bringt im allgemeinen mehrere Nachteile mit sich. So werden bei der Verwendung einer Magnetsonde die technischen Ungenauigkeiten der Messung durch magnetische Störfelder, hervorgerufen durch elektrische Felder oder durch fahrzeugfeste oder mitgeführte Eisenteile, unzulässig groß und die prinzipiellen Ungenauigkeiten bei der Bestimmung der Ortmißweisung durch lokale Abweichungen lassen sich nur mit großem Kompensationsaufwand in akzeptablen Grenzen halten.

Neben dem Kurs über Grund, den der Satellitennavigationsempfänger unmittelbar liefert, ist die genaue Kenntnis des Steuerkurses für verschiedene Situationen während des Flugbetriebs von erheblicher Bedeutung, z.B. zur Berechnung der Stärke und der Richtung des Winds (Windvektor), zum Vorhalten während des Anflugs auf die Landebahn usw.

Aus US-A-4 402 049 ist ein Verfahren bekannt, das auf die Integration der Inertialbeschleunigungen zu Geschwindigkeiten angewiesen ist. Diese Druckschrift gibt denjenigen Stand der Technik an, von dem die Erfindung ausgeht.

Dieses Verfahren weist aber den großen Nachteil auf, daß durch die Integrationen auch die Meßfehler aufintegriert werden und somit wiederum der Einsatz hochgenauer Kreisel und Beschleunigungsmesser notwendig wird.

Die Erfindung liegt die Aufgabe zugrunde, ein Verfahren zur Kursbestimmung in Luftfahrzeugen zu entwickeln, das die Ermittlung des tatsächlichen Steuerkurses erlaubt, ohne die bei bisher bekannten Kursbestimmungsverfahren, die ohne hochgenaue Kreiselkompasse arbeiten, nicht oder nur mit sehr hohem Kompensationsaufwand in akzeptablen Grenzen zu haltenden Kursfehler in Kauf nehmen zu müssen.

Das erfindungsgemäße Verfahren zur Kursbestimmung in Luftfahrzeugen, der eingangs genannten Art, umfaßt die im kennzeichnenden Teil des Patentanspruchs angegebenen Verfahrensschritte, die im folgenden erläutert werden sollen.

Voraussetzungsgemäß ist ein Luftfahrzeug, dessen Kurs nach dem erfindungsgemäßen Verfahren bestimmt werden soll, mit einer Trägheitsnavigationsanlage und mit einer Einrichtung zum Empfang und zur Verarbeitung von Daten für eine Geschwindigkeitsstützung ausgerüstet, die aus von Navigationssatelliten abgestrahlten Signalen gewonnen werden. Die Anfangsausrichtung der Trägheitsanlage erfolgt vor dem Betrieb des Luftfahrzeugs am Boden, und die dabei ermittelten Lagedaten bezüglich des Erdlots werden gespeichert. Während des Flugs werden die laufend auftretenden Beschleunigungen von Beschleunigungsmessern gemessen und liegen dann zunächst in einem körperfesten bzw. luftfahrzeugfesten Koordinatensystem vor. Weitere meßtechnische Voraussetzungen sind nicht zu erfüllen. Unter Verwendung der gespeicherten Lagedaten werden dann die ermittelten Beschleunigungsdaten vom körperfesten Koordinatensystem in ein beliebiges Koordinatensystem (KH) mit horizontaler Ausrichtung verwandelt. Dieses Koordinatensystem (KH) entspricht dem erdfesten Koordinatensystem, jedoch mit der Einschränkung, daß der Kurs (noch) unbestimmt bleibt. Die Kursbestimmung erfolgt dann so, daß beim Auftreten von Beschleunigungen der sich aus der beschriebenen Beschleunigungsmessung ergebende Vektor mit dem Beschleunigungsvektor, ermittelt aus den Satellitendaten, verglichen wird. Die Differenz oder, in anderen Worten, der Winkel zwischen diesen beiden Vektoren stellt unter Berücksichtigung des Vorzeichens den Kurs des Luftfahrzeugs dar.

Da die so ermittelten Differenzen einem Rauschprozeß unterworfen sind, erfolgt die Kursbestimmung gemäß der Erfindung derart, daß die Differenzvektoren einem Filter zugeführt werden, anstatt aus der einfachen Differenzbildung den Kurs zu ermitteln. Unter einem Filter in diesem Sinne wird ein Festverstärkungsfilter oder allgemein jede Form eines Filters mit variablen Verstärkungen verstanden, z.B. ein Kalmanfilter. Durch ein Filter dieser Art wird die Trägheitsnavigationsanlage auf das erdfeste, nordorientierte Koordinatensystem rückgestellt. Dies kann während aller Phasen des Betriebs durchgeführt werden, bei denen Beschleunigungen auftreten. Damit lassen sich auch Driften ausgleichen, die nach einer ersten Kursbestimmung durch die Kreiselfehler hervorgerufen werden. Das erfindungsgemäße Verfahren läßt sich damit auch in Verbindung mit einer nur vorläufigen Grobausrichtung des Kurses vor dem Betrieb des Luftfahrzeugs durch herkömmliche Verfahren, beispielsweise bei Verwendung eines Kreiselkompasses mit ungenügender Anfangsgenauigkeit oder bei Verwendung eines (anfänglichen) Magnetkurses mit ungenügender Meßgenauigkeit bzw. bei ungenügender Bestimmung der Ortmißweisung verwenden. Das erfindungsgemäße Verfahren wird hier zu einer wesentlich schnelleren bzw. nach einer bestimmten Zeit zu einer wesentlich genaueren Kursbestimmung führen.

Aus dem Artikel "Kalman Filter Implementation in The Litton LR-80 AHRS" von Dean Lottman u.a., erschienen 1984 in Proceedings of the IEEE, 1984 National Aerospace and Electronics Conference NAE-CON 1984, S.406–413, ist es bekannt, den ermittelten Kurswinkel zur Rauschunterdrückung einem Kalmanfilter (Azimutfilter) zuzuführen.

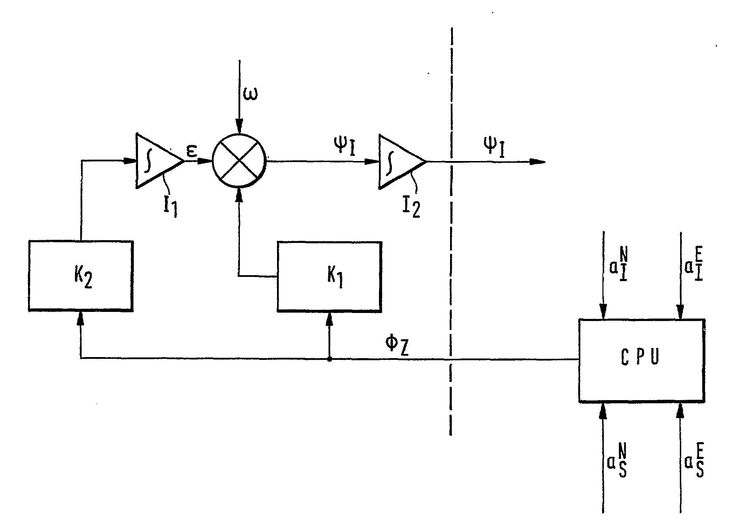

Das erfindungsgemäße Verfahren wird nachfolgend unter Bezug auf die Zeichnung in einer beispielsweisen Ausführungsform näher erläutert.

Die einzige Figur zeigt links von der gestrichelten senkrechten Linie ein Azimutfilter bestimmter Bauart und rechts eine Recheneinheit, der einerseits Komponenten von aus Satellitensignalen gewonnenen Beschleunigungswerten und andererseits zur Berechnung des Kurskorrekturwerts inertiale Beschleunigungskomponenten zugeführt werden.

In der Zeichnung sind mit den entsprechenden Bezugshinweisen folgende Größen gekennzeichnet:

$\psi_I$ = Steuerkurs

$\omega$ = Meßwert eines Azimutkreisels

$\varepsilon$ = Schätzwert des Kreiselrestfehlers

$K_1, _2$ = feste Verstärkungsfaktoren oder variable Verstärkungsfaktoren, z. B. nach dem Kalman-Filterverfahren berechnet

$\phi_Z$ = nach dem erfindungsgemäßen Verfahren berechneter Korrekturwert

$a_S^N$ = Beschleunigungswert aus Satellitensignalen, Nordkomponente

$a_S^E$ = Beschleunigungswert aus Satellitensignalen, Ostkomponente

$a_I^N$ = Inertialbeschleunigungswert, Nordkomponente

$a_I^E$ = Inertialbeschleunigungswert, Ostkomponente

$I_1, I_2$ = Integratoren

CPU = Rechner

Der links von der gestrichelten Vertikallinie dargestellte Komponententeil entspricht einem Azimutfilter, wie es prinzipiell bekannt ist und in Strapdown-Systemen verwendet wird, jedoch mit dem Unterschied, daß der Korrekturwert nicht wie nach dem Stand der Technik üblich aus Kursdifferenzen, sondern unmittelbar aus Beschleunigungsdifferenzen gebildet wird.

Zur Berechnung des Korrekturwerts $\phi_Z$ kann z. B. die lineare Formel

$$\Phi_Z = \frac{a_S^N(a_I^E - a_S^E) - a_S^E(a_I^N - a_S^N)}{\left(a_S^N\right)^2 + \left(a_S^E\right)^2}$$

oder die trigonometrische Formel

$$\bar{\Phi}_Z = \arctan \frac{-a_S^E}{a_S^N} - \arctan \frac{-a_I^E}{a_I^N}$$

benutzt werden.

Welche dieser Formeln sinnvollerweise verwendet wird, richtet sich nach den Bedingungen bzw. dem Betriebssystem des Rechners, in dem die Lösung verwirklicht wird.

Das erfindungsgemäße Verfahren läßt sich gleichermaßen für Luftfahrzeuge verwenden, die mit Trägheitsplattformen, wie auch für solche, die mit Strapdown-Anlagen ausgerüstet sind. Bei Luftfahrzeugen mit Trägheitsplattformen wird dann das erfindungsgemäß gebildete Differenzsignal Drehmomentgebern zugeführt, welche die Plattform einnorden, d.h. im Azimut nachstellen. Bei Strapdown-Kreiselanlagen wird der Differenzvektor zur Bestimmung des Azimuts in der Transformationsmatrix verwendet oder dient bei der Verwendung der Ausführungsvariante mit einem Filter zur Erhöhung der Genauigkeit des Azimuts in der Transformationsmatrix.

## Patentansprüche

Verfahren zur Kursbestimmung in Luftfahrzeugen, die mit wenigstens einer Trägheitsnavigationsanlage inklusive mindestens zweier Beschleunigungsmesser und mit einer Einrichtung zum Empfang und zur Verarbeitung von Daten für eine Geschwindigkeitsstützung ausgerüstet sind, die aus den Signalen von Navigationssatelliten gewonnen werden, bei dem vor Betrieb des Luftfahrzeuges am Boden durch eine Anfangsausrichtung der Trägheitsnavigationsanlage Lagedaten bezüglich des Erdlots bestimmt und gespeichert werden und die beim Betrieb des Luftfahrzeugs auftretenden Beschleunigungen mit Bezug auf ein luftfahrzeugfestes Koordinationssystem gemessen und in ein Koordinatensystem (KH) mit horizontaler Ausrichtung umgesetzt werden, dadurch gekennzeichnet, daß die Kursbestimmung durch Bilden der Differenz zwischen dem Beschleunigungsvektor ($a_t{}^{N,E}$) im Koordinatensystem (KH) mit horizontaler Ausrichtung und dem aus den Satellitendaten ermittelten Beschleunigungsvektor ($a_s{}^{N,E}$) erfolgt und daß der Differenzwinkel ($\Phi Z$) fortlaufend oder in zeitlichen Abständen gebildet und einem Azimutfilter zugeführt wird.

## Claims

Method for determining the course in aircraft which are equipped with at least one inertial navigation system including at least two accelerometers and comprising a device for receiving and for processing data for speed computation support which are obtained from the signals of navigation satellites, in which positional data with respect to the earth's perpendicular are determined on the ground by an initial alignment of the inertial navigation system before operation of the aircraft and are stored and the accelerations occurring during operation of the aircraft are measured with respect to an aircraft-fixed coordinate system and are converted into a coordinate system (KH) with horizontal alignment, characterized in that the course is determined by forming the difference between the acceleration vector ($a_t{}^{N,E}$) in the coordinate system (KH) with horizontal alignment and the acceleration vector ($a_s{}^{N,E}$), determined from the satellite data, and in that the difference angle ($\Phi z$) is formed continuously or at time intervals and is supplied to an azimuth filter.

## Revendications

Procédé pour déterminer le cap dans des aéronefs équipés d'au moins un système de navigation inertielle, incluant au moins deux accéléromètres, et d'un dispositif pour la réception et le traitement de données pour un maintien de la vitesse qui sont obetnues à partir des signaux de satellites de navigation, laquelle méthode consiste à déterminer et à mémoriser au sol des données de position par rapport à la perpendiculaire au sol avant la mise en exploitation de l'aéronef, par une orientation initiale du système de navigation inertielle, à mesurer les accélérations intervenant au cours de l'exploitation de l'aéronef par rapport à un système de coordonnées de bord et à les traduire en un système de coordonnées (KH) aligné horizontalement, caractérisée en ce que la détermination du cap se fait par la formation de la différence entre le vecteur d'accélération ($a_t{}^{N,E}$) dans le système de coordonnées (KH) à alignement horizontal et le vecteur d'accélération ($a_s{}^{N,E}$) déterminé à partir des données de satellite, et que l'angle différentiel ($\Phi z$) est formé en permanence ou à des intervalles de temps et transmis à un filtre d'azimut.